# EUROPÄISCHE PATENTANMELDUNG

(11) **EP 4 531 063 A1**
(43) Veröffentlichungstag der Anmeldung: **02.04.2025**
(21) Anmeldenummer: 24201984.2
(22) Anmeldetag: 23.09.2024
(51) Int. Cl.: H01F 5/00, H01F 27/34, H01F 38/14, H01F 27/28, H01F 38/18

(54) **ELEKTRISCHE LEITUNG, SPULE UND INDUKTIVE ENERGIEÜBERTRAGUNGSVORRICHTUNG**

(30) Priorität: 28.09.2023 DE 102023126454
(71) Anmelder: Universität Stuttgart, 70174 Stuttgart (DE)
(72) Erfinder: Elbracht, Lukas, 70178 Stuttgart (DE); Noeren, Jannis, 74369 Löchgau (DE)
(74) Vertreter: Witte, Weller & Partner Patentanwälte mbB

(57) **Zusammenfassung**

Die vorliegende Erfindung betrifft eine elektrische Leitung, eine Spule und eine induktive Energieübertragungsvorrichtung. Die elektrische Leitung umfasst einen Leitungsträger mit mindestens zwei im Wesentlichen parallel angeordneten Trägerschichten und eine Vielzahl von Leiterbahnen, die auf mindestens drei unterschiedlichen, im Wesentlichen parallel angeordneten Trägerflächen der Trägerschichten angeordnet sind. Eine einzelne Leiterbahn der Vielzahl von Leiterbahnen weist mindestens drei Leiterbahnabschnitte, die auf mindestens drei unterschiedlichen Trägerflächen angeordnet sind. Jeweils zwei Leiterbahnabschnitte einer Leiterbahn sind durch eine quer zu den Trägerflächen und durch mindestens eine Trägerschicht verlaufende Vertikalverbindung miteinander verbunden. Auf einer Trägerfläche sind mehrere Leiterbahnabschnitte verschiedener Leiterbahnen angeordnet, die zumindest bereichsweise parallel zueinander und zumindest bereichsweise entlang einer Längserstreckungsrichtung verlaufen. Ein auf einer Trägerfläche angeordneter Leiterbahnabschnitt weist mehrere Abschnittselemente auf, wobei jeweils zwei in Längserstreckungsrichtung aufeinander folgende Abschnittselemente sowohl in Längserstreckungsrichtung als auch in senkrecht dazu verlaufender Querrichtung versetzt zueinander angeordnet sind und durch ein Querverbindungselement miteinander verbunden sind.

## Beschreibung

Die vorliegende Erfindung betrifft eine elektrische Leitung, eine Spule und eine induktive Energieübertragungsvorrichtung. Ferner betrifft die Erfindung ein elektrisches Gerät mit einer solchen Spule und/oder einer solchen induktiven Energieübertragungsvorrichtung.

Eine elektrische Leitung ist ein linienförmiger elektrischer Leiter zum Transport elektrischer Energie oder zur Signalübertragung. Elektrische Leitungen bestehen meist aus niederohmigen metallischen elektrischen Leitern, beispielsweise in Form von Drähten, Litzen, Schienen oder gedruckten Leiterbahnen. Je nach Anwendung können unterschiedliche Anforderungen an elektrische Leitungen gestellt werden. Häufige Anforderungen an elektrische Leitungen sind geringer elektrischer Widerstand, verlustarme Energie- oder Signalübertragung, kostengünstige Herstellung, hohe Stromdichtetragfähigkeit, und flexibler Einsatz.

Der vorliegenden Erfindung liegt die Aufgabe zugrunde, eine elektrische Leitung bereitzustellen, die bei Anwendungen im kHz-Bereich und höheren Frequenzen möglichst verlustarm arbeiten, preiswert herstellbar sind und einen geringen Platzbedarf haben. Der vorliegenden Erfindung liegt ferner die Aufgabe zugrunde, eine Spule, eine induktive Energieübertragungsvorrichtung und ein elektrisches Gerät anzugeben, bei denen eine solche Leitung vorteilhaft eingesetzt wird.

Gemäß einem Aspekt der vorliegenden Erfindung wird eine elektrische Leitung bereitgestellt, mit:
einem Leitungsträger mit mindestens zwei im Wesentlichen parallel angeordneten Trägerschichten; und
einer Vielzahl von Leiterbahnen, die auf mindestens drei unterschiedlichen, im Wesentlichen parallel angeordneten Trägerflächen der Trägerschichten angeordnet sind, wobei:
   - eine einzelne Leiterbahn der Vielzahl von Leiterbahnen mindestens drei Leiterbahnabschnitte aufweist, die auf mindestens drei unterschiedlichen Trägerflächen angeordnet sind;
   - jeweils zwei Leiterbahnabschnitte einer Leiterbahn durch eine quer zu den Trägerflächen und durch mindestens eine Trägerschicht verlaufende Vertikalverbindung miteinander verbunden sind;
   - auf einer Trägerfläche mehrere Leiterbahnabschnitte verschiedener Leiterbahnen angeordnet sind, die zumindest bereichsweise parallel zueinander und die zumindest bereichsweise entlang einer Längserstreckungsrichtung verlaufen; und
   - ein auf einer Trägerfläche angeordneter Leiterbahnabschnitt mehrere Abschnittselemente aufweist, wobei jeweils zwei in Längserstreckungsrichtung aufeinander folgende Abschnittselemente sowohl in Längserstreckungsrichtung als auch in senkrecht dazu verlaufender Querrichtung versetzt zueinander angeordnet sind und durch ein Querverbindungselement miteinander verbunden sind.

Gemäß einem weiteren Aspekt der vorliegenden Erfindung wird eine Spule bereitgestellt mit mindestens einer spiralförmig angeordneten Windung einer elektrischen Leitung gemäß der vorliegenden Erfindung.

Gemäß noch einem weiteren Aspekt der vorliegenden Erfindung wird eine induktive Energieübertragungsvorrichtung bereitgestellt mit einer Primärspuleneinheit und einer Sekundärspuleneinheit, wobei die Primärspuleneinheit und/oder die Sekundärspuleneinheit eine Spule gemäß der vorliegenden Erfindung aufweist.

Ferner wird gemäß einem weiteren Aspekt der vorliegenden Erfindung ein elektrisches Gerät mit einer erfindungsgemäßen Spule und/oder einer erfindungsgemäßen induktiven Energieübertragungsvorrichtung bereitgestellt. Das elektrische Gerät ist beispielsweise ein mobiles Gerät oder eine Bodenplatte mit einer Spule gemäß der vorliegenden Erfindung. Bei dem mobilen Gerät kann es sich beispielsweise um ein Fahrzeug handeln, an das in stationärem Zustand oder während der Fahrt kontaktlos elektrische Energie übertragen werden kann, beispielsweise mittels einer oder mehrere Bodenplatten, in die Primärspulen integriert sind. Alternativ kann das elektrische Gerät eine elektrische Maschine, beispielsweise eine induktiv elektrisch erregte Synchronmaschine, mit einer induktiven Energieübertragungsvorrichtung gemäß der vorliegenden Erfindung sein. Gemäß einem weiteren Aspekt betrifft die vorliegende Erfindung auch ein elektrisches Gerät mit einer Spule und/oder einer induktiven Energieübertragungsvorrichtung, die mittels einer elektrischen Leitung in Form von Leiterbahnen, die auf einer oder mehreren Leiterplatten angebracht sind und deren Verlauf den verdrillten Verlauf der Einzeldrähte einer Litze nachbildet.

Bevorzugte Ausführungsformen der Erfindung sind in den abhängigen Ansprüchen definiert. Es versteht sich, dass die beanspruchte Spule und die beanspruchte induktive Energieübertragungsvorrichtung ähnliche und/oder identische bevorzugte Ausführungsformen aufweisen wie die beanspruchte elektrische Leitung, insbesondere wie in den abhängigen Ansprüchen definiert ist und wie vorliegend offenbart ist.

Der Erfindung liegt der Gedanke zugrunde, eine Vielzahl Leiterbahnen auf mehreren (mindestens drei, bevorzugt mindestens vier) unterschiedlichen Trägerflächen, die wiederum auf mehreren Trägerschichten (beispielsweise PCB-Schichten) eines Leitungsträgers (beispielsweise eines PCB-Trägers) angeordnet sind, anzubringen und diese sowohl innerhalb einer Trägerfläche als auch zwischen Trägerflächen versetzt zueinander anzuordnen. Mehrere Teilstücke ("Leiterbahnabschnitte") einer Leiterbahn sind somit auf unterschiedlichen Trägerflächen angeordnet und sind durch gesonderte Vertikalverbindungen (beispielsweise Vias) elektrisch miteinander verbunden. Jedes Teilstück weist wiederum mehrere Teile ("Abschnittselemente") auf, die innerhalb der Teilfläche versetzt zueinander verlaufen und durch Querverbindungen elektrisch miteinander verbunden sind. Die Trägerschichten und die Trägerflächen sind im Wesentlichen parallel angeordnet, worunter verstanden werden soll, dass Abweichungen von der exakten Parallelität bis zu ± 25°, bevorzugt bis zu ± 10°, noch weiter bevorzugt bis zu maximal ± 5°, und Abweichungen aufgrund von Fertigungstoleranzen mit eingeschlossen sein sollen.

Die Anordnung der Leiterbahnen erfolgt bevorzugt derart, dass die Leiterbahnen jeweils in etwa gleich lang sind und quasi, wie bei einer aus einer Vielzahl von Einzeldrähten bestehenden Litze, miteinander verwoben sind. Dies führt dazu, dass der Strom homogen über den gesamten Querschnitt verteilt ist. Zudem lässt sich eine solche elektrische Leitung kostengünstig und sehr platzsparend, insbesondere sehr flach ausgestalten, was bei diversen Anwendungen Vorteile mit sich bringt. Ferner können weitere Komponenten, die beispielsweise für eine induktive Energieübertragungsvorrichtung erforderlich oder vorteilhaft sind, einfach integriert werden. Solche Komponenten, etwa für eine Blindleistungskompensation, können damit direkt auf einer mittels einer erfindungsgemäßen Leitung gebildeten Spule (z.B. auf einer PCB) angebracht werden.

Die erfindungsgemäße elektrische Leitung eignet sich für diverse Anwendungen, bevorzugt wenn wenig Platz zur Verfügung steht und eine kostengünstige Herstellung im Vordergrund stehen bei gleichzeitig verlustarmer Energieübertragung und hoher Stromdichtetragfähigkeit. Bevorzugt kann eine solche elektrische Leitung bei Spulen mit einer oder mehreren Windungen genutzt werden, wie sie beispielsweise als Primär- und/oder Sekundärspulen bei induktiven Energieübertragungssystemen zum Einsatz kommen. Dort steht oftmals nur wenig Platz für die Anordnung der Spulen zur Verfügung und die Herstellung soll kostengünstig möglich sein. Andere Anwendungsgebiete sind beispielsweise Transformatoren in sehr flachen Ausführungen oder integrierte Transformatoren auf einer einzelnen Leiterplatte, indem zwei Spulen verschachtelt aufgebaut sind.

In einer bevorzugten Ausgestaltung ist vorgesehen, dass ein Abschnittselement eines Leiterbahnabschnitts durch ein Endverbindungselement mit einer Vertikalverbindung verbunden ist, wobei die Vertikalverbindung in Querrichtung versetzt zu dem Abschnittselement angeordnet ist. Die Vertikalverbindung ist somit - in Längserstreckungsrichtung gesehen - nicht auf einer Linie mit dem Abschnittselement, sondern quer dazu versetzt. Auf einer anderen Trägerfläche kann somit in der gleichen vertikalen Ebene wie die Leiterbahn eine andere Leiterbahn verlaufen, ohne mit der Vertikalverbindung zu kollidieren.

In diesem Zusammenhang sei erwähnt, dass der Begriff "quer" im Zusammenhang mit der vorliegenden Erfindung nicht als "senkrecht dazu verlaufend" verstanden werden soll, sondern auch einen schrägen Verlauf mit einem Winkel zwischen 0° und 180° mit umfassen soll.

In einer weiteren Ausgestaltung ist vorgesehen, dass die Querverbindungselemente und die Endverbindungselemente in einer Trägerfläche gruppenweise parallel zueinander angeordnet sind. Der Versatz der parallel verlaufenden Abschnittselemente erfolgt somit - in Längserstreckungsrichtung gesehen - für alle Abschnittselemente aller Leiterbahnen auf einer Trägerfläche in Wesentlichen an der gleichen Stelle. Die Leiterbahnen können dadurch auf einer Trägerfläche eng nebeneinander geführt werden, ohne dass sie sich berühren oder kreuzen.

In einer weiteren Ausgestaltung ist vorgesehen, dass die Vertikalverbindungen in mindestens einem Vertikalverbindungsbereich angeordnet sind, der in Längserstreckungsrichtung und/oder im Wesentlichen parallel zu den Leiterbahnabschnitten verläuft. Ferner ist in einer Ausgestaltung vorgesehen, dass die Vertikalverbindungen in mindestens einem Vertikalverbindungsbereich angeordnet sind, der von den Leiterbahnabschnitten beabstandet ist und/oder in dem keine Abschnittselemente von Leiterbahnabschnitten angeordnet sind. Bevorzugt sind in allen Vertikalverbindungsbereichen aller Trägerflächen keine Abschnittselemente von Leiterbahnabschnitten angeordnet. Die Vertikalverbindungen sind somit in einem oder mehreren Vertikalverbindungsbereichen angeordnet und können deshalb durch eine oder bevorzugt alle Trägerschichten und deren Trägerflächen hindurch reichen, ohne mit Leiterbahnabschnitten zu kollidieren. Dies erleichtert die Herstellung der Vertikalverbindungen sowie die Anschlüsse von Leiterbahnabschnitten in den gewünschten Trägerschichten. Beispielsweise kann zur Herstellung einer Vertikalverbindung zunächst eine Bohrung durch sämtliche Trägerschichten erstellt werden, in die die danach leitendes Material eingebracht wird. Dies ermöglicht eine besonders kostengünstige Herstellung der Vertikalverbindungen und somit der elektrischen Leitung.

In einer Ausgestaltung entspricht der Abstand zwischen einem Vertikalverbindungsbereich und unmittelbar benachbarten Abschnittselementen mindestens dem Abstand zwischen zwei benachbarten Abschnittselementen. Dadurch ist sichergestellt, dass bei der Herstellung die Vertikalverbindungen kein Abschnittselement berühren. Ferner kann dadurch der Füllfaktor von elektrisch leitfähigem Material (z.B. bei Verwendung von Kupfer der sog. Kupferfüllfaktor) maximiert werden.

Bevorzugt ist vorgesehen, dass auf mindestens einer Trägerfläche der Abstand zwischen dem Vertikalverbindungsbereich und unmittelbar benachbarten Abschnittselementen gleich oder größer ist als der Abstand zwischen zwei benachbarten Abschnittselementen. Dadurch besteht eine größere Flexibilität hinsichtlich der Anordnung der Vertikalverbindungen und der Endverbindungselemente, die Abschnittselemente mit Vertikalverbindungen elektrisch verbinden. Diese Endverbindungselemente können dann - ganz oder teilweise, je nach Bedarf - in dem vergrößerten Abstandsbereich flexibel und mit der gewünschten Form angeordnet werden, ohne die benachbarten Abschnittselemente, sowohl auf der gleichen Trägerfläche oder auf anderen Trägerflächen, zu beeinträchtigen oder eine Veränderung in deren Anordnung zu erfordern. Mit anderen Worten, die Abschnittselemente, die Vertikalverbindungen und die Endverbindungselemente können - aus elektrischer Sicht und aus Sicht kostengünstiger und einfacher Herstellung sowie eines möglichst geringen Platzbedarfs - bestmöglich angeordnet werden.

Der Vertikalverbindungsbereich kann beispielsweise zwei Vertikalverbindungsteilbereiche aufweisen, die in Querrichtung gesehen in gegenüberliegenden Endbereichen außerhalb des zentralen Bereichs, in dem die Leiterbahnabschnitte verlaufen, angeordnet sind. Die Vertikalverbindungsteilbereiche sind somit bevorzugt in den äußeren Bereichen der Trägerflächen angeordnet, während die Leitungsabschnitte zentral auf den Trägerflächen verlaufen. Es sind jedoch auch andere Ausgestaltungen denkbar, etwa die Anordnung der Vertikalverbindungen im zentralen Bereich, von den ausgehend die Leitungsabschnitte nach außen hin verlaufen.

In einer Ausgestaltung ist vorgesehen, dass die Vertikalverbindungen durch mehrere Trägerschichten, insbesondere durch alle Trägerschichten, hindurch reichen. Dies ist vor allem auch deshalb möglich, wenn die Vertikalverbindungsbereiche beabstandet von den Leitungsabschnitte angeordnet sind und die Vertikalverbindungen nicht mit den Vertikalverbindungen kollidieren. Dies bringt Ersparnisse bei der Herstellung mit sich, da weniger Vertikalverbindungen erforderlich sind verglichen mit einer Ausgestaltung, bei der Vertikalverbindungen lediglich Abschnittselement von Leitungsabschnitten auf benachbarten Trägerflächen verbinden.

Die Vertikalverbindungen können grundsätzlich nur jeweils ein einziges Verbindungselement aufweisen. Sie können aber jeweils auch mehrere (bevorzugt parallel verlaufende) Verbindungselemente aufweisen und/oder als ein oder mehrere Vias oder Durchkontaktierungen ausgestaltet sein. Durch mehrere Verbindungselemente, z.B. mehrere Vias oder Durchkontaktierungen, die beispielsweise in Längserstreckungsrichtung hintereinander angeordnet sind, kann die elektrische Verbindung sichergestellt werden. Zudem ergeben sich ein geringerer elektrischer Widerstand und damit eine bessere Leitfähigkeit und ein höherer Wirkungsgrad. Ferner können dadurch die einzelnen Verbindungselemente (Vias oder Durchkontaktierungen) mit geringerem Querschnitt und somit platzsparend ausgebildet verglichen mit nur einem einzigen Verbindungselement, das einen größeren Durchmesser aufweisen würde. Damit wird durch den Vertikalverbindungsbereich weniger Platz auf der Trägerflächen in Anspruch genommen, so dass mehr oder dickere Leiterbahnen auf den Trägerflächen Platz finden.

In einer bevorzugten Implementierung sind auf einer ersten Trägerfläche die Abschnittselemente eines Leiterbahnabschnitts in Längserstreckungsrichtung gesehen in einer ersten Richtung in Querrichtung zueinander versetzt und in einer zweiten Trägerfläche die Abschnittselemente eines Leiterbahnabschnitts in Längserstreckungsrichtung gesehen in einer zweiten Richtung in Querrichtung zueinander versetzt, die entgegensetzt zu der ersten Richtung verläuft. Diese beiden Trägerflächen können benachbarte Trägerflächen oder weiter voneinander beabstandete Trägerflächen sein.

Bevorzugt weist die elektrische Leitung zwei oder mehr Leitungsträger auf, die übereinander angeordnet sind und deren Vertikalverbindungen an gegenüber liegenden Trägerflächen zweier Leitungsträger elektrisch miteinander verbunden sind. Dabei sind zwei benachbarte Leitungsträger bevorzugt durch eine Trennschicht, beispielsweise ein Dielektrikum, Substrat, Luft, etc., voneinander getrennt.

Die erfindungsgemäße elektrische Leitung eignet sich grundsätzlich für einen breiten Frequenzbereich, d.h., sie kann bei unterschiedlichen Frequenzbereichen eingesetzt werden. Beispielhafte Anwendungen liegen im Frequenzbereich von 10 kHz bis 1 MHz; andere Anwendungen können aber auch niedrigere oder höhere Frequenzbereiche bis in den Bereich von GHz nutzen.

Die erfindungsgemäße elektrische Leitung eignet sich grundsätzlich für einen breiten Leistungsbereich, d.h., sie kann bei unterschiedlichen Leistungsbereichen eingesetzt werden. Beispielhafte Anwendungen liegen im Leistungsbereich von 10 W bis 100 kW; andere Anwendungen können aber auch niedrigere oder höhere Leistungsbereiche nutzen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in den nachfolgenden Zeichnungen dargestellt und werden in der nachfolgenden Beschreibung näher erläutert. Es zeigen:
- Fig. 1: eine perspektivische Darstellung einer erfindungsgemäßen elektrischen Leitung;
- Fig. 2: Draufsichten auf vier unterschiedliche Trägerflächen einer erfindungsgemäßen elektrischen Leitung;
- Fig. 3: einen vergrößerten Ausschnitt auf erste und zweite Trägerflächen einer erfindungsgemäßen elektrischen Leitung;
- Fig. 4: einen in Längserstreckungsrichtung verlaufenden Querschnitt durch eine erfindungsgemäße elektrische Leitung;
- Fig. 5: einen in Querrichtung verlaufenden Querschnitt durch eine erfindungsgemäße elektrische Leitung;
- Fig. 6: eine Draufsicht auf diverse Ausführungsformen einer um 90° umgelenkten erfindungsgemäßen elektrischen Leitung;
- Fig. 7: in Längserstreckungsrichtung verlaufende Querschnitte durch diverse Ausführungsformen einer erfindungsgemäßen elektrischen Leitung mit unterschiedlichen Arten von Vertikalverbindungen;
- Fig. 8: eine erfindungsgemäße Spule im Querschnitt und in einer Draufsicht;
- Fig. 9: eine perspektivische Ansicht einer erfindungsgemäßen induktiven Energieübertragungsvorrichtung;
- Fig. 10: eine Darstellung eines mobilen Geräts mit einer Spule gemäß der vorliegenden Erfindung im Querschnitt und als Ansicht von unten;
- Fig. 11: zeigt einen schematischen Aufbau einer PCB-Induktivität gemäß der vorliegenden Erfindung;
- Fig. 12: zeigt im Querschnitt zwei Ausführungsformen einer elektrischen Maschine mit einer erfindungsgemäßen Energieübertragungsvorrichtung;
- Fig. 13: zeigt eine Ausführungsform einer Kompensationsschaltung zur Verwendung bei einer Energieübertragungsvorrichtung gemäß der vorliegenden Erfindung;
- Fig. 14: zeigt eine erste Ausführungsformen der Anordnung von Drosselspule der Kompensationsschaltung in Bezug auf die Primärspule;
- Fig. 15: zeigt eine zweite Ausführungsformen der Anordnung von Drosselspule der Kompensationsschaltung in Bezug auf die Primärspule;
- Fig. 16: zeigt zwei Ausführungsformen unterschiedlicher Anordnungen von Querverbindungselementen;
- Fig. 17: zeigt verschiedene perspektivische Ansichten von Leiterbahnabschnitten und Vertikalverbindungselementen; und
- Fig. 18: zeigt ein Ausführungsbeispiel der Anordnung einer Vielzahl von Leiterbahnabschnitten in einer Trägerfläche mit einem Verlauf von benachbarten Querverbindungselementen der in Fig. 16B gezeigten Art.

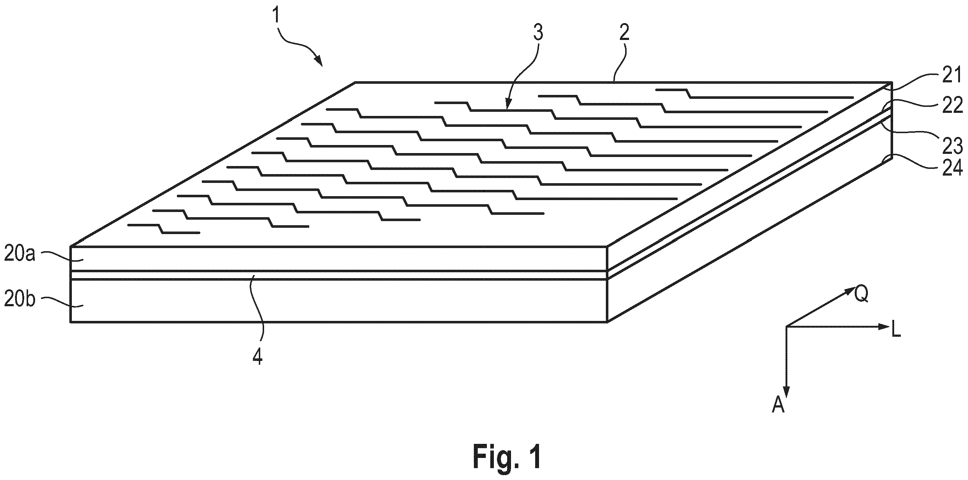

Fig. 1 zeigt eine perspektivische Darstellung einer erfindungsgemäßen elektrischen Leitung 1. Die elektrische Leitung 1 weist einen Leitungsträger 2 und eine Vielzahl von Leiterbahnen 3 auf. Der Leitungsträger 2 weist mindestens zwei (im vorliegenden Beispiel genau zwei) im Wesentlichen parallel angeordnete Trägerschichten 20a, 20b auf und kann beispielsweise als Leiterplatte, Leiterkarte, Platine oder gedruckte Schaltung, etwa in Form eines PCB (Printed Circuit Board) mit mehreren PCB-Schichten als Trägerschichten 20a, 20b, ausgestaltet sein. Die Vielzahl von Leiterbahnen 3 sind auf mindestens drei (im vorliegenden Beispiel vier) unterschiedlichen, im Wesentlichen parallel angeordneten Trägerflächen 21, 22 23, 24 der Trägerschichten angeordnet sind.

Im vorliegenden Beispiel entsprechen die Trägerflächen 21 und 22 den beiden gegenüber liegenden Oberflächen der Trägerschicht 20a und die Trägerflächen 23 und 24 den beiden gegenüber liegenden Oberflächen der Trägerschicht 20b. Auf jeder Trägerfläche 21-24 sind im vorliegenden Beispiel neun Leiterbahnen angeordnet, beispielsweise in Form von gedruckten Leiterbahnen aus einem elektrisch leitenden Material wie etwa Kupfer. Zwischen den Trägerschichten 20a, 20b ist bevorzugt eine Trennschicht 4 angeordnet, beispielsweise in Form eines Dielektrikums, einer Isolierschicht, eines Substrats oder auch einer Luftschicht.

Für die nachfolgenden Erläuterungen sind auch folgende Richtungsangaben in Fig. 1 von Bedeutung: Längserstreckungsrichtung L, senkrecht dazu verlaufende Querrichtung Q und senkrecht zu L und Q verlaufende Schichtrichtung A.

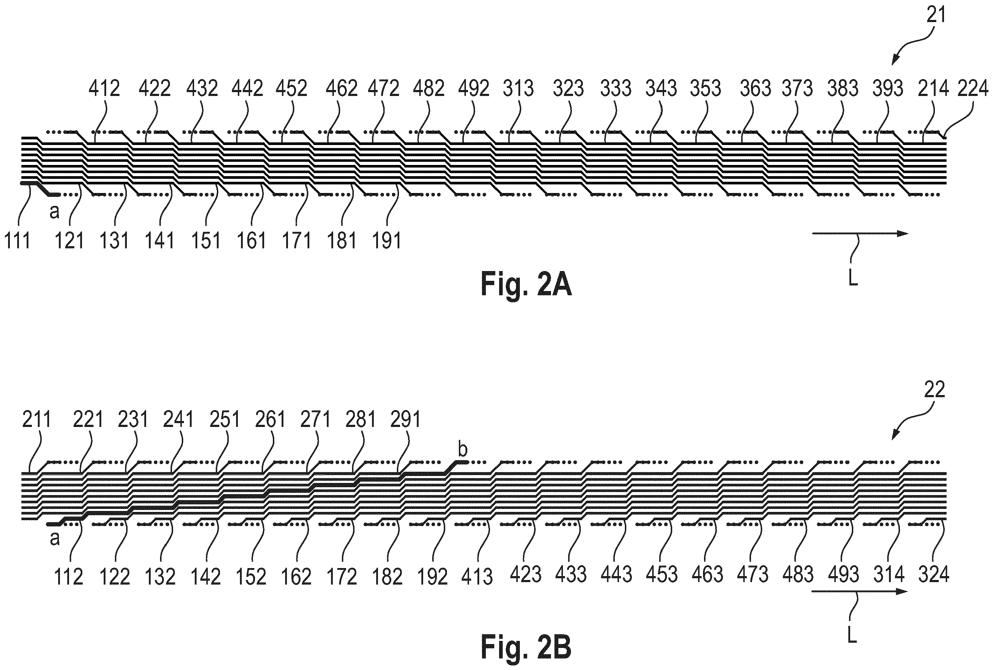

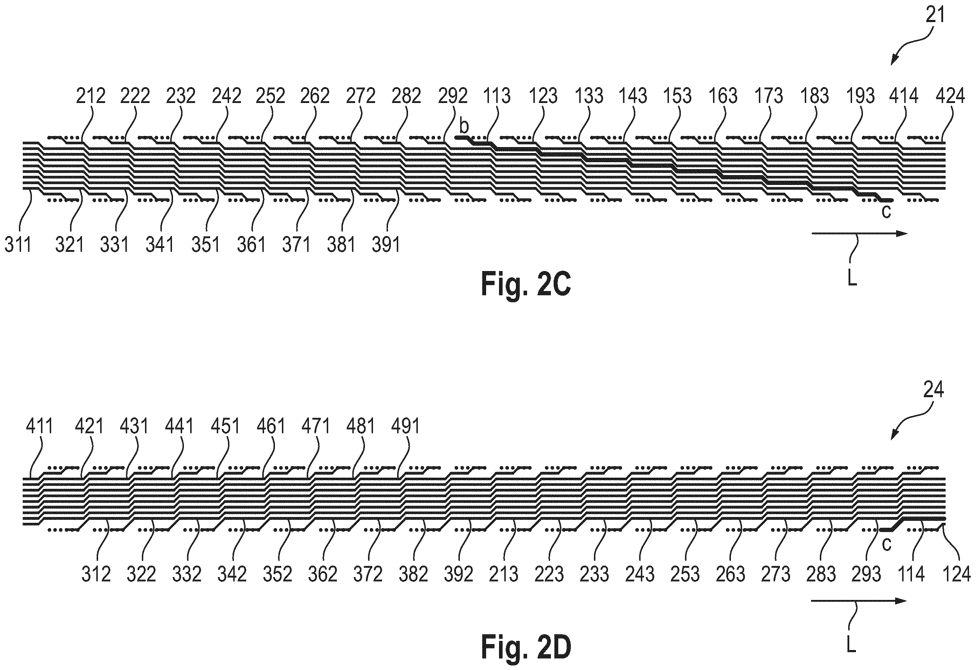

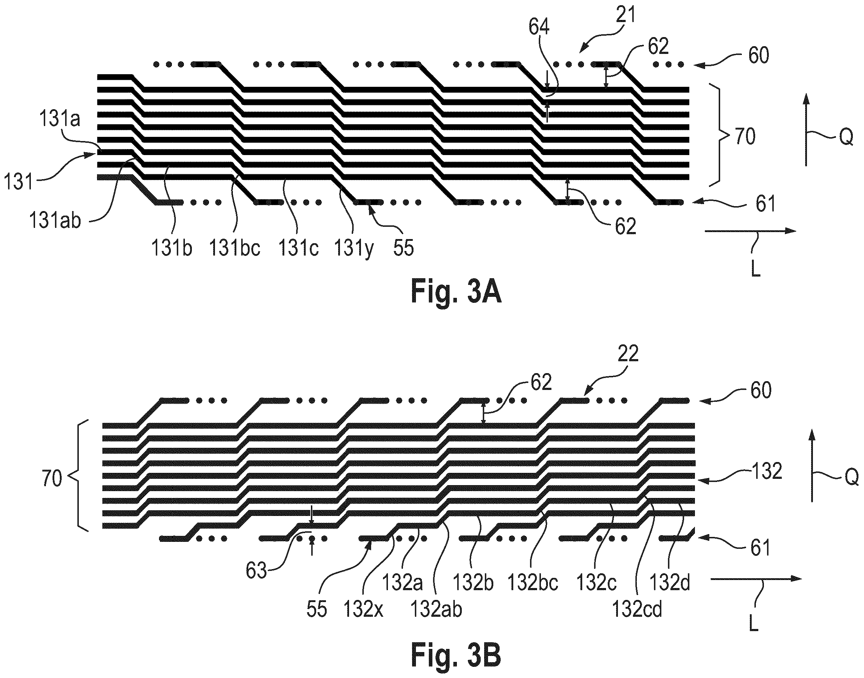

Fig. 2 zeigt Draufsichten auf die Anordnung von Leiterbahnen auf den vier unterschiedlichen Trägerflächen 21-24 einer erfindungsgemäßen elektrischen Leitung. Fig. 2A zeigt die erste Trägerfläche 21, Fig. 2B zeigt die zweite Trägerfläche 22, Fig. 2C zeigt die dritte Trägerfläche 23 und Fig. 2D zeigt die vierte Trägerfläche 25. Fig. 3 zeigt vergrößerte Ausschnitte auf die erste Trägerfläche 21 (Fig. 3A) und die zweite Trägerfläche 22 (Fig. 3B).

Erfindungsgemäß weist eine einzelne Leiterbahn der Vielzahl von Leiterbahnen mindestens drei Leiterbahnabschnitte auf, die auf mindestens drei unterschiedlichen Trägerflächen angeordnet sind. In dem in den Figuren 1 bis 5 gezeigten Ausführungsbeispiel weisen die Leiterbahnen jeweils vier Leiterbahnabschnitte auf, die jeweils auf einer anderen Trägerfläche angeordnet sind. Die einzelnen Leiterbahnen können auch jeweils mehr Leiterbahnabschnitte als Trägerflächen aufweisen, so dass auf jeder Trägerfläche mehrere Leiterbahnabschnitte einer Leiterbahn angeordnet sind.

In dem gezeigten Ausführungsbeispiel weist die elektrische Leitung 1 beispielhaft insgesamt 36 Leiterbahnen auf. Auf der in Fig. 2A gezeigten ersten Trägerfläche 21 sind - von links beginnend - die ersten Leiterbahnabschnitte 111-191 der ersten neun Leiterbahnen angeordnet. Ferner sind die zweiten Leiterbahnabschnitte 412-492 der vierten neun Leiterbahnen, die dritten Leiterbahnabschnitte 313-393 der dritten neun Leiterbahnen und die vierten Leiterbahnabschnitte 214-224 (die restlichen vierten Leiterbahnabschnitte sind nicht dargestellt) der zweiten neun Leiterbahnen auf der ersten Trägerfläche 21 angeordnet.

Auf der in Fig. 2B gezeigten zweiten Trägerfläche 22 sind - von links beginnend - die ersten Leiterbahnabschnitte 211-291 der zweiten neun Leiterbahnen angeordnet. Ferner sind die zweiten Leiterbahnabschnitte 112-192 der ersten neun Leiterbahnen, die dritten Leiterbahnabschnitte 413-493 der vierten neun Leiterbahnen und die vierten Leiterbahnabschnitte 314-324 (die restlichen vierten Leiterbahnabschnitte sind nicht dargestellt) der dritten neun Leiterbahnen auf der zweiten Trägerfläche 22 angeordnet.

Auf der in Fig. 2C gezeigten dritten Trägerfläche 23 sind - von links beginnend - die ersten Leiterbahnabschnitte 311-391 der dritten neun Leiterbahnen angeordnet. Ferner sind die zweiten Leiterbahnabschnitte 212-292 der zweiten neun Leiterbahnen, die dritten Leiterbahnabschnitte 113-193 der ersten neun Leiterbahnen und die vierten Leiterbahnabschnitte 414-424 (die restlichen vierten Leiterbahnabschnitte sind nicht dargestellt) der vierten neun Leiterbahnen auf der dritten Trägerfläche 23 angeordnet.

Auf der in Fig. 2D gezeigten vierten Trägerfläche 24 sind - von links beginnend - die ersten Leiterbahnabschnitte 411-491 der vierten neun Leiterbahnen angeordnet. Ferner sind die zweiten Leiterbahnabschnitte 312-392 der dritten neun Leiterbahnen, die dritten Leiterbahnabschnitte 213-293 der zweiten neun Leiterbahnen und die vierten Leiterbahnabschnitte 114-124 (die restlichen vierten Leiterbahnabschnitte sind nicht dargestellt) der ersten neun Leiterbahnen auf der vierten Trägerfläche 24 angeordnet.

Je nach Länge der elektrischen Leitung können sich weitere Leiterbahnabschnitte der jeweiligen Leiterbahnen anschließen, die auch dann wieder auf unterschiedlichen Trägerflächen angeordnet sind, wie nachfolgend noch erläutert wird. Auf einer Trägerfläche sind somit jeweils mehrere Leiterbahnabschnitte verschiedener Leiterbahnen angeordnet, die zumindest bereichsweise parallel entlang der Längserstreckungsrichtung L verlaufen.

Jede Leiterbahn setzt sich somit aus mehreren Leiterbahnabschnitten zusammen, die auf unterschiedlichen Trägerflächen angeordnet sind. Eine beispielhafte erste Leiterbahn setzt aus den Leiterbahnabschnitten 111, 112, 113, 114 zusammen. Der erste Leiterbahnabschnitt 111 befindet sich auf der ersten Trägerfläche 21 und endet an der mit dem Buchstaben a gekennzeichneten Stelle. Der zweite Leiterbahnabschnitt 112 befindet sind auf der zweiten Trägerfläche 22, beginnend an der mit dem Buchstaben a gekennzeichneten Stelle, und endet an der mit dem Buchstaben b gekennzeichneten Stelle. Der dritte Leiterbahnabschnitt 113 befindet sind auf der dritten Trägerfläche 23, beginnend an der mit dem Buchstaben b gekennzeichneten Stelle, und endet an der mit dem Buchstaben c gekennzeichneten Stelle. Der vierte Leiterbahnabschnitt 114 befindet sind auf der vierten Trägerfläche 24, beginnend an der mit dem Buchstaben c gekennzeichneten Stelle und setzt sich weiter nach rechts in Längserstreckungsrichtung fort. Danach können weitere Leiterbahnabschnitte folgen (nicht gezeigt), die abwechselnd auch wieder auf den verschiedenen Trägerflächen 21-24 angeordnet sind. Dabei kann die Reihenfolge der Trägerflächen, auf denen die Leiterbahnabschnitte nacheinander angeordnet sind, auch anders sein kann also in den Fig. 2A-2D gezeigt ist und sich in Längserstreckungsrichtung auch ändern kann.

In der in Fig. 3A gezeigten vergrößerten Darstellung eines Ausschnitts der ersten Trägerfläche 21 ist deutlich erkennbar, dass ein einzelner auf einer Trägerfläche angeordneter Leiterbahnabschnitt, beispielsweise der erste Leiterbahnabschnitt 131 der dritten Leiterbahn mehrere (im vorliegenden Beispiel drei) Abschnittselemente 131a, 131b, 131c aufweist, die in Längserstreckungsrichtung L und in senkrecht dazu verlaufender Querrichtung Q versetzt zueinander angeordnet sind. Dabei sind jeweils zwei in Längserstreckungsrichtung L aufeinander folgende Abschnittselemente sind somit versetzt zueinander in Längserstreckungsrichtung und in senkrecht dazu verlaufender Querrichtung angeordnet und sind durch ein Querverbindungselement miteinander verbunden. Beispielsweise sind die Abschnittselemente 131a und 131b durch ein Querverbindungselement 131ab miteinander verbunden, und die Abschnittselemente 131b und 131c sind durch ein Querverbindungselement 131bc miteinander verbunden.

In dem gezeigten Ausführungsbeispiel ist das dritte Abschnittselement 131c mittels eines Endverbindungselements 131y mit einer Vertikalverbindung 55 verbunden. Durch diese Vertikalverbindung 55 erfolgt der Wechsel dieser Leiterbahn von der Trägerfläche 21 zu der Trägerfläche 22, von der Fig. 3B einen vergrößerten Ausschnitt zeigt. Dort ist der zweite Leiterbahnabschnitt 132 der dritten Leiterbahn erkennbar, der mehrere (im vorliegenden Beispiel sind nur die ersten vier in Fig. 3B erkennbar) Abschnittselemente 132a, 132b, 132c, 132d aufweist, die in Längserstreckungsrichtung L und in senkrecht dazu verlaufender Querrichtung Q versetzt zueinander angeordnet sind. Auch hier sind jeweils zwei in Längserstreckungsrichtung L aufeinander folgende, versetzt zueinander angeordnete Abschnittselemente durch ein Querverbindungselement 132ab, 132bc, 132cd miteinander verbunden. Ferner ist das erste Abschnittselement 132a mittels eines Endverbindungselement 132x mit der Vertikalverbindung 55 verbunden. Der Trägerflächenwechsel erfolgt somit dadurch, dass die Endverbindungselemente 131y und 132x durch die Vertikalverbindung 55 miteinander verbunden sind.

In den Figuren 2 und 3 ist erkennbar, dass die Querverbindungselemente und die Endverbindungselemente in einer Trägerfläche gruppenweise parallel zueinander angeordnet sind. Ferner ist erkennbar, dass ein Abschnittselement eines Leiterbahnabschnitts durch ein Endverbindungselement mit einer Vertikalverbindung verbunden ist und dass die Vertikalverbindung in Querrichtung versetzt zu dem jeweiligen Abschnittselement angeordnet ist.

Die Vertikalverbindungen sind bevorzugt in einem separaten Vertikalverbindungsbereich angeordnet sind, der in Längserstreckungsrichtung und im Wesentlichen parallel zu den Leiterbahnabschnitten verläuft. Im gezeigten Ausführungsbeispiel weist der Vertikalverbindungsbereich zwei Vertikalverbindungsteilbereiche 60, 61 auf, die in Querrichtung gesehen in gegenüberliegenden Endbereichen außerhalb des zentralen Bereichs 70, in dem die Leiterbahnabschnitte verlaufen, angeordnet ist. Der Vertikalverbindungsbereich (bzw. die Vertikalverbindungsteilbereiche 60, 61) sind von den Leiterbahnabschnitten beabstandet, und es sind in dem Vertikalverbindungsbereich keine Abschnittselemente von Leiterbahnabschnitten angeordnet. Bevorzugt sind in allen Vertikalverbindungsbereichen aller Trägerflächen keine Abschnittselemente von Leiterbahnabschnitten angeordnet.

Dadurch wird erreicht, dass die Vertikalverbindungen durch eine oder bevorzugt alle Trägerschichten und deren Trägerflächen hindurch reichen können, ohne mit Leiterbahnabschnitten zu kollidieren. Die Herstellung der Vertikalverbindungen sowie der Anschlüsse von Leiterbahnabschnitten in den gewünschten Trägerschichten wird somit vereinfacht und ist besonders kostengünstig möglich.

Der Abstand 62, 63 zwischen einem Vertikalverbindungsbereich 60, 61 und unmittelbar benachbarten Abschnittselementen entspricht bevorzugt mindestens dem Abstand 64 zwischen zwei benachbarten Abschnittselementen. In anderen Ausgestaltungen kann der Abstand 62, 63 allerdings auch kleiner sein als der Abstand 64. Ferner ist bevorzugt auf mindestens einer Trägerfläche der Abstand 62 zwischen dem Vertikalverbindungsbereich 60, 61 und unmittelbar benachbarten Abschnittselementen gleich oder bevorzugt größer ist als der Abstand 64 zwischen zwei benachbarten Abschnittselementen. Die Anordnung der Vertikalverbindungen und der Endverbindungselemente, die Abschnittselemente mit Vertikalverbindungen elektrisch verbinden, ist dadurch flexibler möglich, was wiederum auch die Herstellung vereinfacht und kostengünstiger macht.

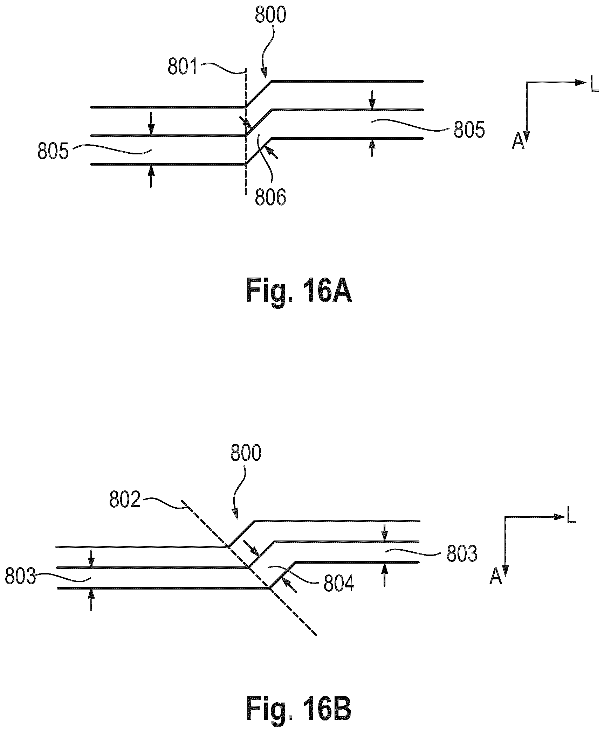

Fig. 16 zeigt zwei Ausführungsbeispiele der Anordnung von Querverbindungselementen. Bei den in den Figuren 1 bis 3 gezeigten Ausführungsbeispielen sind, wie in Fig. 16A vereinfacht dargestellt, die Querverbindungselemente 800 benachbarter Leiterbahnabschnitte innerhalb einer Trägerfläche, die jeweils aufeinanderfolgende Abschnittselemente eines Leiterbahnabschnitts miteinander verbinden, entlang einer Linie 801 angeordnet sind, die im Wesentlichen senkrecht zu der Längserstreckungsrichtung L verläuft. Alternativ können die Querverbindungselemente 800 benachbarter Leiterbahnabschnitte aber auch entlang einer Linie 802 angeordnet sein, die unter einem von 90° verschiedenen Winkel zur Längserstreckungsrichtung L verläuft. Ein solches Ausführungsbeispiel ist in Fig. 16B gezeigt.

Die in Fig. 16B gezeigte Ausgestaltung hat den Vorteil, dass der Abstand 803 zwischen zwei benachbarten Leiterbahnabschnitten (vor und nach einem Querverbindungselement) genauso groß bleiben kann wie der Abstand 804 zwischen zwei benachbarten Querverbindungselementen. Dies wiederum führt dazu, dass die einzelnen Leiterbahnabschnitte dicker ausgestaltet werden können als bei der in Fig. 16A gezeigten Ausgestaltung, bei der der Abstand 805 zwischen zwei benachbarten Leiterbahnabschnitten (vor und nach einem Querverbindungselement) größer ist als der Abstand 806 zwischen zwei benachbarten Querverbindungselementen. Der Füllfaktor mit Leiterbahnmaterial, also die Ausnutzung der für die Aufbringung von Leiterbahnen zur Verfügung stehenden Fläche auf einer Leiterplatte, kann somit bei der in Fig. 16B gezeigten Ausgestaltung höher ausfallen und kann somit zu einer weiteren Kostensenkung in der Herstellung führen.

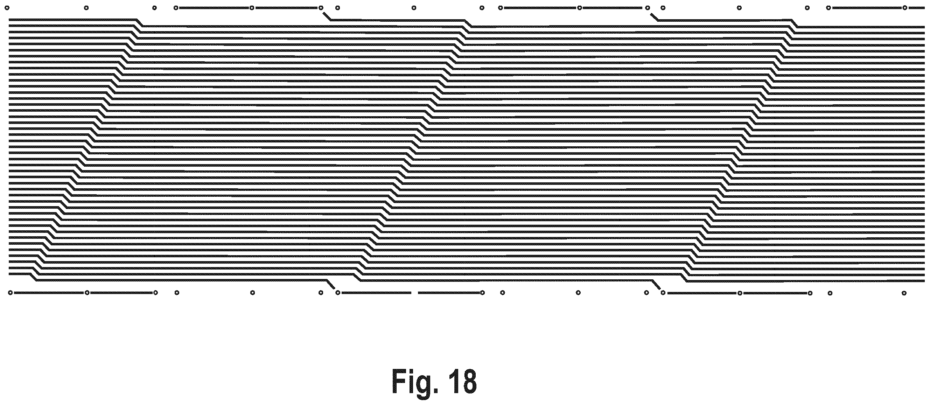

Fig. 18 zeigt ein Ausführungsbeispiel der Anordnung einer Vielzahl von Leiterbahnabschnitten in einer Trägerfläche, bei der die benachbarten Querverbindungselemente entlang einer Linie verlaufen, die - ähnlich wie vereinfacht in Fig. 16B gezeigt - quer zur Längserstreckungsrichtung L verläuft.

Nicht gezeigt ist in den Figuren 1 bis 3, dass die Anfänge und Enden der verschiedenen Leiterbahnen elektrisch miteinander verbunden sind und damit eine gemeinsame elektrische Leitung bilden, durch die ein Strom geleitet werden kann.

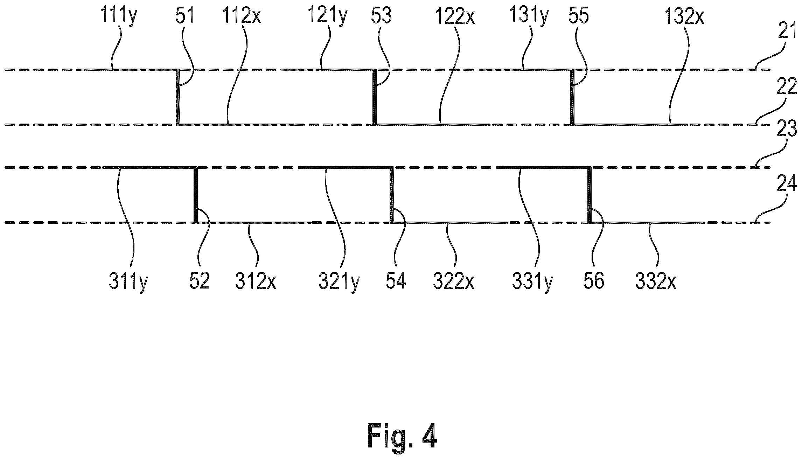

Fig. 4 zeigt schematisch einen in Längserstreckungsrichtung verlaufenden Querschnitt durch einen Ausschnitt einer erfindungsgemäßen elektrischen Leitung im Bereich der Endverbindungselemente und der Vertikalverbindungen. Erkennbar sind mehrere Vertikalverbindungen 51-56, die in Längsrichtung gesehen an unterschiedlichen Stellen angeordnet sind. Jeweils zwei Leiterbahnabschnitte einer Leiterbahn sind durch eine quer zu den Trägerflächen und durch die Trägerschichten verlaufende Vertikalverbindung miteinander verbunden. Bevorzugt reichen die Vertikalverbindungen jeweils durch alle Trägerschichten und Trägerflächen hindurch. Sie können aber auch, wie in Fig. 4 gezeigt, jeweils nur durch eine Trägerschicht und zwei Trägerflächen hindurch reichen.

Über die Vertikalverbindung 51 sind das Endverbindungselement 111y des ersten Leiterbahnabschnitts 111 der ersten Leiterbahn auf der ersten Trägerfläche 21 und das Endverbindungselement 112x des zweiten Leiterbahnabschnitts 112 auf der zweiten Trägerfläche 22 miteinander verbunden. Über die Vertikalverbindung 52 sind das Endverbindungselement 311y des ersten Leiterbahnabschnitts 311 der ersten Leiterbahn auf der dritten Trägerfläche 23 und das Endverbindungselement 312x des zweiten Leiterbahnabschnitts 312 auf der vierten Trägerfläche 24 miteinander verbunden.

Über die Vertikalverbindung 53 sind das Endverbindungselement 121y des ersten Leiterbahnabschnitts 121 der zweiten Leiterbahn auf der ersten Trägerfläche 21 und das Endverbindungselement 122x des zweiten Leiterbahnabschnitts 122 auf der zweiten Trägerfläche 22 miteinander verbunden. Über die Vertikalverbindung 54 sind das Endverbindungselement 321y des ersten Leiterbahnabschnitts 321 der zweiten Leiterbahn auf der dritten Trägerfläche 23 und das Endverbindungselement 322x des zweiten Leiterbahnabschnitts 322 auf der vierten Trägerfläche 24 miteinander verbunden.

Über die Vertikalverbindung 55 sind das Endverbindungselement 131y des ersten Leiterbahnabschnitts 131 der dritten Leiterbahn auf der ersten Trägerfläche 21 und das Endverbindungselement 132x des zweiten Leiterbahnabschnitts 132 auf der zweiten Trägerfläche 22 miteinander verbunden. Über die Vertikalverbindung 56 sind das Endverbindungselement 331y des ersten Leiterbahnabschnitts 331 der dritten Leiterbahn auf der dritten Trägerfläche 23 und das Endverbindungselement 332x des zweiten Leiterbahnabschnitts 332 auf der vierten Trägerfläche 24 miteinander verbunden.

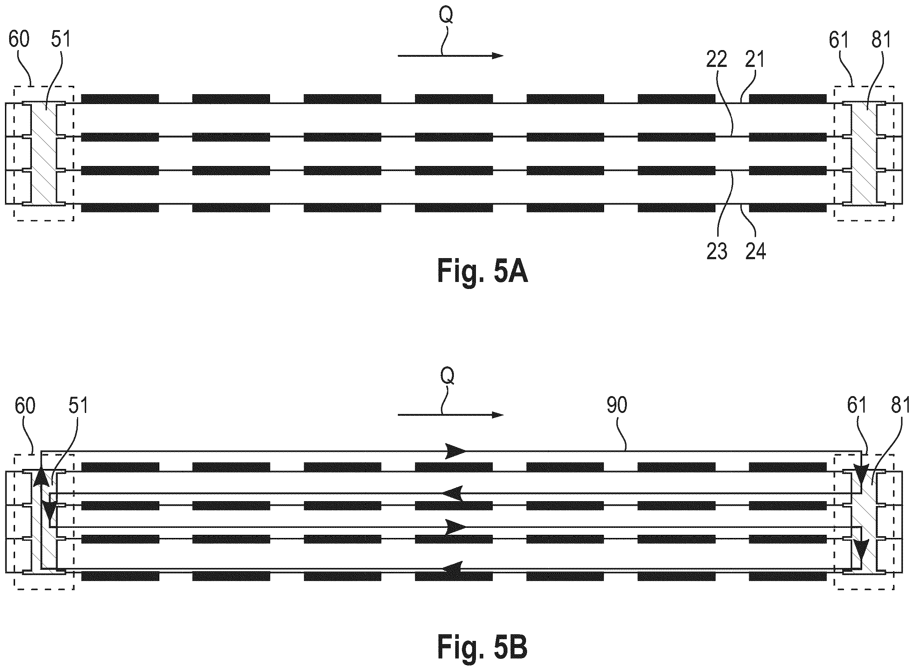

Fig. 5A zeigt einen in Querrichtung verlaufenden Querschnitt durch eine erfindungsgemäße elektrische Leitung 1. Erkennbar sind in diesem Beispiel sieben Leiterbahnen auf jeder der vier Trägerflächen 21-24. Ferner ist an den gegenüber liegenden Seiten jeweils eine Vertikalverbindung 51, 81 erkennbar, die in den gegenüber liegenden Vertikalverbindungsteilbereichen 60 bzw. 61 angeordnet sind.

Fig. 5B zeigt den in Fig. 5A gezeigten Querschnitt, wobei zusätzlich noch der Strompfad 90 über die einzelnen Trägerflächen und durch die Vertikalverbindungen 51, 81 gezeigt ist. Erkennbar ist, dass der Strompfad 90 in unterschiedlichen Richtungen durch die Leiterbahnabschnitten auf benachbarten Trägerflächen führt. Dadurch, und durch die Verläufe der Leiterbahnabschnitten auf den Trägerflächen wird quasi der Strompfad durch die miteinander verwobenen Einzeldrähte bei einer Litze nachgebildet.

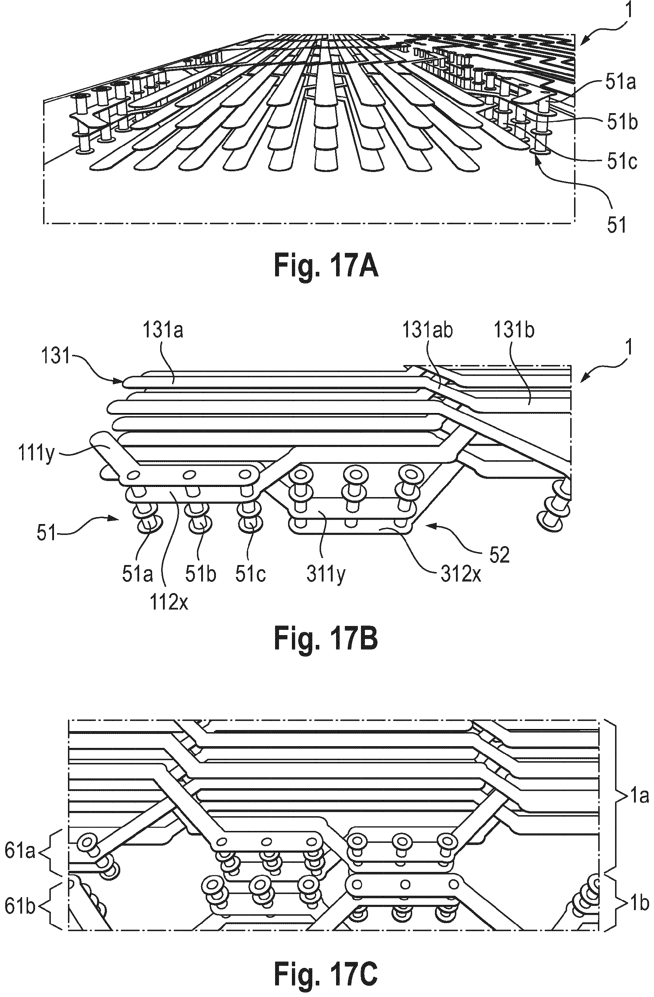

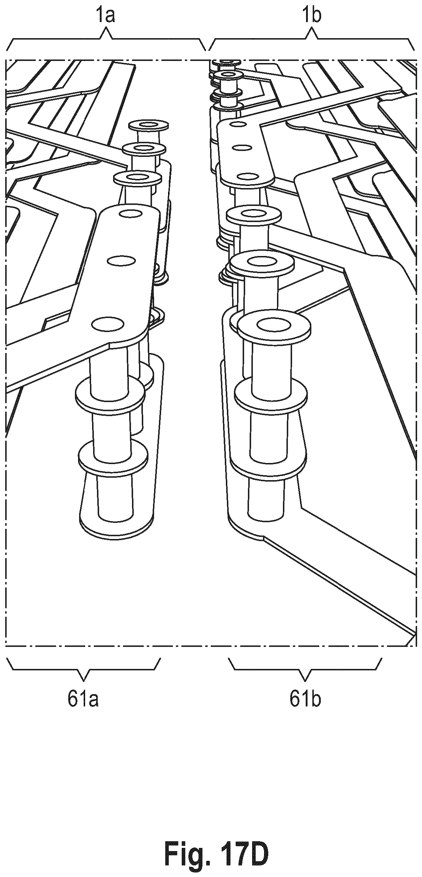

Fig. 17 zeigt verschiedene perspektivische Ansichten von Leiterbahnabschnitten und Vertikalverbindungselementen. Fig. 17A zeigt eine perspektivische Frontansicht (in Längserstreckungsrichtung L) einer in den Figuren 1 bis 5 gezeigten elektrischen Leitung 1. Fig. 17B zeigt eine perspektivische Seitenansicht dieser Leitung 1. Erkennbar ist vor allem, wie auf den vier unterschiedlichen Trägerflächen 21-24 die Leitungsabschnitte mit den Vertikalverbindungselementen verbunden sind. In dem gezeigten Beispiel sind die Vertikalverbindungselemente (beispielsweise das Vertikalverbindungselement 51) durch jeweils drei Vias 51a, 51b, 51c gebildet, die hintereinander angeordnet sind. Alternativ können aber auch ein oder zwei oder mehr Vias verwendet werden. Die Vertikalverbindungselemente verlaufen jeweils vollständig durch alle Trägerschichten hindurch, was eine kostengünstige Herstellung mittels Durchgangsbohrung ermöglicht, auch wenn sie nicht in allen Trägerflächen mit Leiterbahnabschnitten verbunden sind, sondern nur jeweils zwei Leiterbahnabschnitte miteinander elektrisch verbinden.

Ferner ist erkennbar, wie die Abschnittselemente der Leiterbahnabschnitte (beispielsweise die Abschnittselement 131a, 131b des Leiterbahnabschnitts 131) innerhalb der verschiedenen Trägerflächen 21-24 in Längserstreckungsrichtung versetzt zueinander angeordnet sind, d.h., in Längserstreckungsrichtung hintereinander angeordnet sind (bevorzugt ohne sich in Längserstreckungsrichtung zu überlappen), und in senkrecht dazu verlaufender Querrichtung versetzt zueinander angeordnet sind, d.h., quasi die "Bahn" in Längserstreckungsrichtung wechseln. Erkennbar ist zudem, wie jeweils zwei in Längserstreckungsrichtung aufeinander folgende, versetzt zueinander angeordnete Abschnittselemente (beispielsweise die Abschnittselement 131a, 131b des Leiterbahnabschnitts 131) durch ein Querverbindungselement (beispielsweise das Querbindungselement 131 ab) miteinander verbunden sind.

Fig. 17C zeigt eine perspektivische Frontansicht (in Längserstreckungsrichtung L) von Teilen zweier benachbarter Leitungen 1a, 1b der in den Figuren 1 bis 5 gezeigten Art. Fig. 17D zeigt eine perspektivische Seitenansicht dieser benachbarten Leitungen 1a, 1b. Erkennbar sind darin vor allem die benachbarten Vertikalverbindungsbereiche 61a, 61b, in denen die Vertikalverbindungen der Leitungen 1a, 1b angeordnet sind.

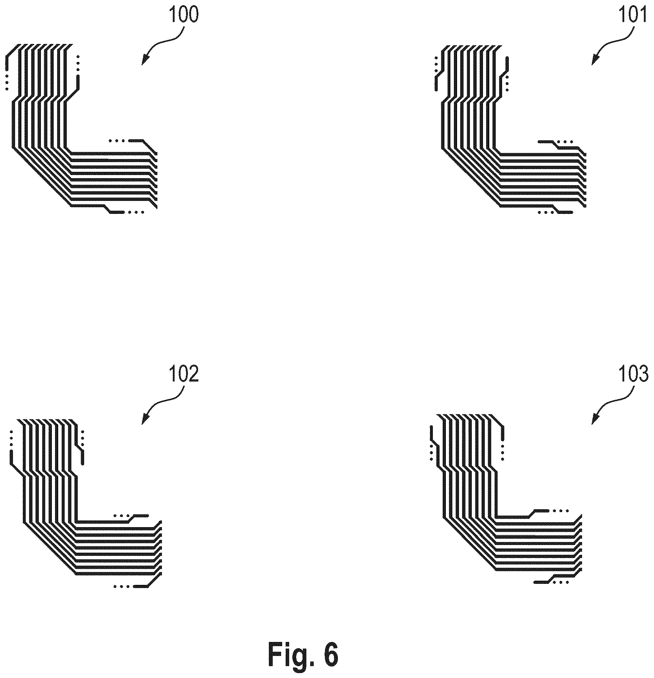

Fig. 6 zeigt diverse Ausführungsformen 100, 101, 102, 103, wie die elektrische Leitung 2 ausgestaltet sein kann, um ihre Richtung zu ändern, im vorliegenden Fall um 90° in Längserstreckungsrichtung. Diese Ausführungsformen können beispielsweise genutzt werden, um mit der elektrischen Leitung eine Spule zu formen, wie nachfolgend noch erläutert wird. Die elektrische Leitung 2 kann aber auch anders verlaufen; beispielsweise können auch in den Kurven die Leitungsabschnitte die Trägerflächen wechseln, oder die Kurven können abgerundet sein oder anders als gezeigt verlaufen.

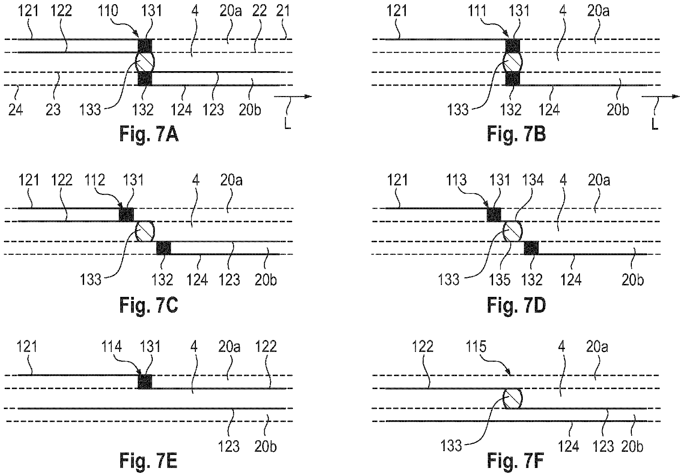

Fig. 7 zeigt in Längserstreckungsrichtung verlaufende Querschnitte durch diverse Ausführungsformen 110-115 einer erfindungsgemäßen elektrischen Leitung 2 mit unterschiedlichen Arten von Vertikalverbindungen. Dabei sind zwei Trägerschichten 20a und 20b (z.B. zwei PCB-Leiterplatten) übereinandergeschichtet, zwischen denen eine Trennschicht 4 beispielsweise ein Dielektrikum, Substrat, Luft, etc., angeordnet ist. Die Oberflächen der Trägerschichten 20a, 20b stellen jeweils eine der Trägerflächen 21-24 dar. Die Trägerschichten 20a, 20b können beispielsweise miteinander verschweißt oder aufeinander laminiert sein, und die Trennschicht 4 kann aus dem gleichen Material bestehen wie die Trägerschichten 20a, 20b. Bevorzugt wird eine gerade Anzahl von Trägerflächen verwendet.

Bei den in den Figuren 7A und 7C gezeigten Ausführungsformen ist auf jeder der Trägerflächen 21-24 jeweils eine (von mehreren) Leiterbahnen 121-124 erkennbar. Die auf den Trägerflächen der gleichen Trägerschicht angeordneten beiden Leiterbahnen 121 und 122 bzw. 123 und 124 sind jeweils durch eine, durch die jeweilige Trägerschicht durchgeführte Vertikalverbindung 131 bzw. 132 verbunden, die beispielsweise als Durchkontaktierung (through hole via) ausgestaltet sein kann. Zwischen den Trägerflächen 22 und 23 ist zudem eine durch die Trennschicht 4 hindurchgeführte elektrische Trennschichtverbindung 133 vorgesehen, beispielsweise in Form einer metallischen Verbindung (z.B. in Form eines Lötpunkts, beispielsweise aus Zinn). Während bei der in Fig. 7A gezeigten Ausführungsform 110 die Vertikalverbindungen 131, 132 und die Trennschichtverbindung 133 vertikal übereinander angeordnet sind, sind diese bei der in Fig. 7C gezeigten Ausführungsform 112 in Längserstreckungsrichtung L versetzt zueinander angeordnet. Die versetzte Anordnung hat den Vorteil, dass sich die Vertikalverbindungen 131, 132 nicht mit dem Material der Vertikalverbindungen (z.B. Zinn) vollsaugen können, was die Qualität der Vertikalverbindungen beeinflussen könnte und keine gleichbleibende Qualität sicherstellen könnte. Ein direktes Aufbringen des Materials der Vertikalverbindungen direkt über einer Vertikalverbindung wird deshalb bevorzugt vermieden. Alternativ können die Vertikalverbindungen auch bewusst mit Füllmaterial gefüllt werden (sog. "Plugging"). Bei der in Fig. 7C gezeigten Ausführungsform 112 sind zudem die Leiterbahnen 122 und 123 jeweils bis zur Trennschichtverbindung 133 verlängert, die die Leiterbahnen 122 und 123 verbindet. Die Verbindung zu den Leiterbahnen 121 und 124 kann beispielsweise über Durchkontaktierungen hergestellt werden.

Bei den in den Figuren 7B und 7D gezeigten Ausführungsformen 111, 113 sind jeweils nur die auf den äußersten Trägerflächen 21, 24 angeordneten Leiterbahnen 121 bzw. 124 erkennbar, die über die Vertikalverbindungen 131, 132 und die Trennschichtverbindung 133 miteinander verbunden sind. Zur Verbindung der Vertikalverbindungen 131, 132 mit der Trennschichtverbindung 133 sind auf den Trägerflächen 22, 23 kurze Verbindungsleitungen 134, 135 angeordnet, um die oben im Zusammenhang mit den Figuren 7A und 7C beschriebene Problematik des Vollsaugens der Vertikalverbindungen mit dem Material der Vertikalverbindungen zu vermeiden und ohne "Plugging" auszukommen.

Bei den in den Figuren 7E und 7F gezeigten Ausführungsformen 114, 115 sind jeweils nur die auf drei Trägerflächen angeordneten Leiterbahnen 121, 122, 123 (Fig. 7E) bzw. 122, 123, 124 (Fig. 7F) erkennbar. Bei der Ausführungsform 114 ist nur die Vertikalverbindungen 131 vorhanden, die die beiden Leiterbahnen 121, 122 miteinander verbindet. Bei der Ausführungsform 115 ist nur die Trennschichtverbindung 133 vorhanden, die die beiden Leiterbahnen 122, 123 miteinander verbindet. Diese Ausführungsformen bieten den Vorteil, dass bei dieser Leiterbahnkonstellation auf sog. Blind und Buried Vias (also Kontaktierungen, die nicht durch die gesamte Leiterplatte hindurchgehen) verzichtet werden kann. Dies kann die Kosten für den Gesamtaufbau reduzieren, da auf Prozessschritte in der Leiterplattenfertigung verzichtet werden kann. Bei der Ausführungsform 114 (Fig. 7E) kann zusätzlich auch eine Leiterbahn 124 (siehe Fig. 7F) vorgesehen sein und bei der Ausführungsform 115 (Fig. 7F) kann zusätzlich auch eine Leiterbahn 121 (siehe Fig. 7E) vorgesehen sein. Grundsätzlich ist der in den verschiedenen Figuren gezeigte Aufbau nicht auf drei Lagen (Trägerflächen) und zwei Trägerschichten beschränkt, sondern es können immer auch mehr als drei Lagen (Trägerflächen) und/oder mehr als zwei Trägerschichten vorgesehen sein.

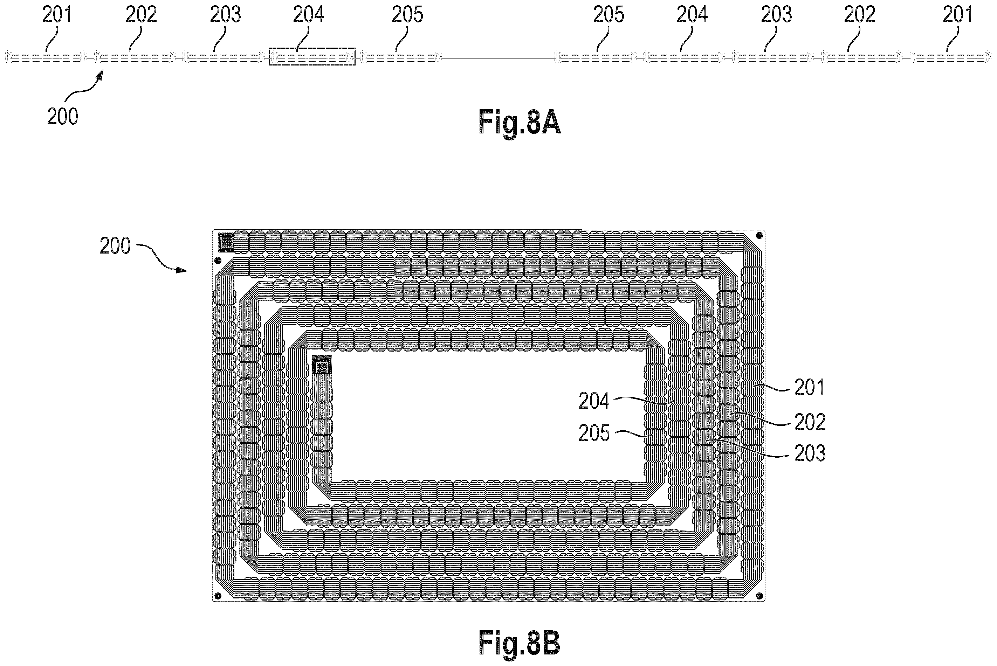

Fig. 8 zeigt eine erfindungsgemäße Spule 200 im Querschnitt (Fig. 8A) und in einer Draufsicht (Fig. 8B). Die Spule 200 kann eine oder mehrere Windungen aufweisen, die mittels der erfindungsgemäßen elektrischen Leitung gebildet sind. Im gezeigten Beispiel weist die Spule 200 fünf Windungen 201-205 auf. Jede der Windungen 201-205 kann im Querschnitt beispielweise wie in den Figuren 4 oder 5A gezeigt aufgebaut sein, d.h., jede Wicklung ist durch mehrere Leiterbahnen gebildet, die, wie in der vorliegenden Anmeldung beschrieben, angeordnet sind und die beschriebene elektrische Leitung bilden.

In dem gezeigten Ausführungsbeispiels ist ein Ende der Spule am äußeren Rand und das andere Ende im Inneren der Spule angeordnet. Die Windungen können aber auch so geführt werden, dass beide Enden innen oder außen liegen. Beispielsweise können zwei, wie in Fig. 8 gezeigte Spulen separat auf separaten Trägerschichten (mit z.B. jeweils vier Trägerflächen) angeordnet werden. Anschließend werden beide Spulen (die separaten Trägerschichten) übereinander angeordnet, und die beiden innen liegenden Enden der beiden Spulen oder die beiden außen liegenden Enden der beiden Spulen miteinander verbunden.

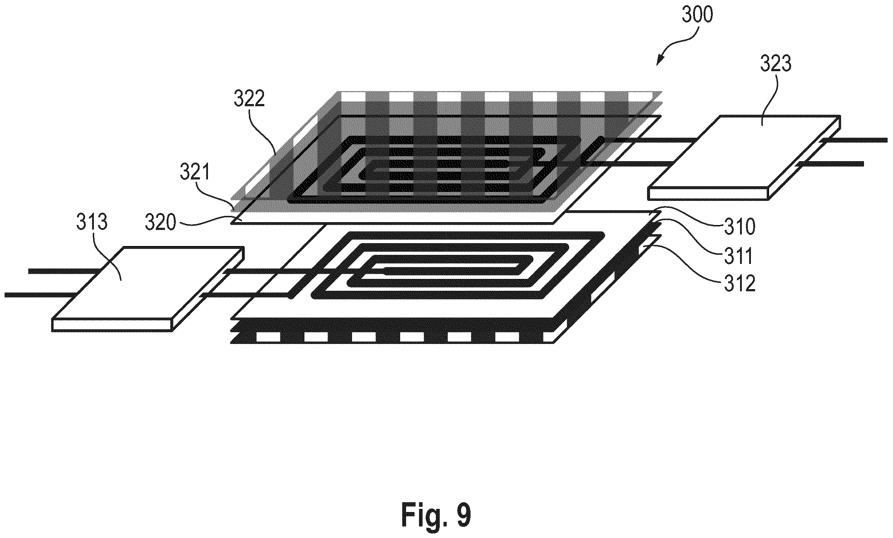

Fig. 9 zeigt eine perspektivische Ansicht einer erfindungsgemäßen induktiven Energieübertragungsvorrichtung 300. Diese weist eine Primärspule 310 und eine Sekundärspule 320 bei. Beide Spulen 310, 320 (oder auch nur eine der beiden Spulen 310, 320 können mittels der erfindungsgemäßen elektrischen Leitung aufgebaut sein und beispielsweise, wie in Fig. 8 gezeigt, ausgestaltet sein. Bevorzugt ist zumindest die Primärspule 310 mithilfe der der erfindungsgemäßen elektrischen Leitung aufgebaut, da dadurch eine besonders kostengünstige und flache Bauform erzielt werden kann, was für diverse Anwendungen von induktiven Energieübertragungsvorrichtungen von Vorteil ist.

Die gezeigte Energieübertragungsvorrichtung 300 weist in dem gezeigten Ausführungsbeispiel auf der Primärseite und der Sekundärseite jeweils Flussführungsmittel 311, 321 (z.B. Plättchen, eine Platte oder Schicht aus weichmagnetischem Material, etwa Ferrit) und Schirmungsmittel (z.B. Plättchen, eine Platte oder Schicht aus elektrisch leitfähigem Material, etwa Kupfer oder Aluminium) auf. Die Spulen 310, 320 sind jeweils mit einer Elektronikeinrichtung 312, 322 verbunden, insbesondere zur Zuführung des Primärstroms und Abnahme des Sekundärstroms. Ferner können bevorzugt jeweils weitere Elektronikmittel 313, 323 vorgesehen, beispielsweise zur Ansteuerung, Blindleistungskompensation und Stromabnahme.

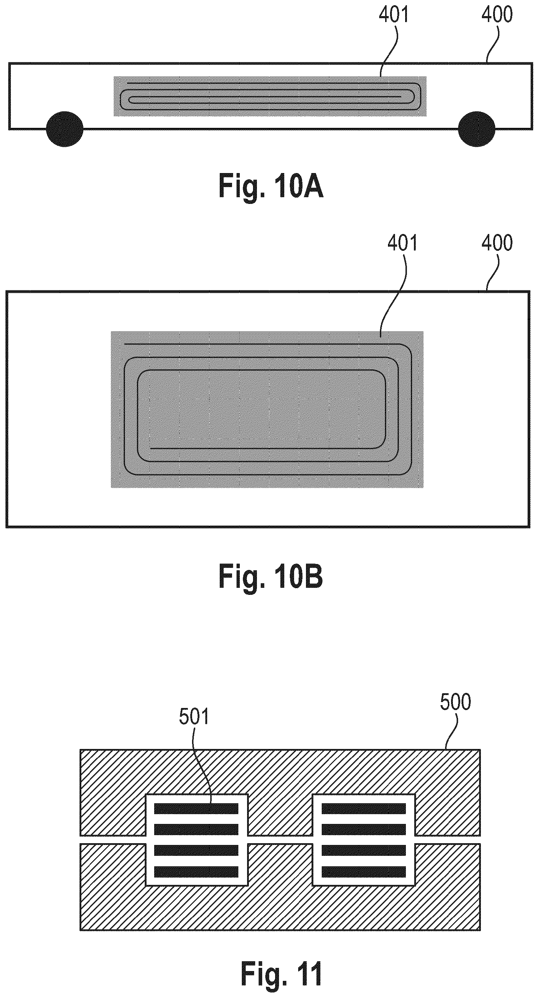

Fig. 10 zeigt ein mobiles Gerät 400 mit einer in Fig. 8 gezeigten Spule 401 als Querschnitt (Fig. 10A) und als Ansicht von unten (Fig. 10B). Die Spule 401 ist bevorzugt an oder in einer äußeren Oberfläche des mobilen Geräts 400 angeordnet und dient als Sekundärspule, um kontaktlos Energie an das mobile Gerät 400 übertragen zu können, wenn die Spule einer Primärspule einer in Fig. 9 gezeigten induktiven Energieübertragungsvorrichtung gegenüber liegt. Die Energieübertragung kann im stationären Zustand oder dynamisch (d.h. während der Bewegung des mobilen Geräts 400) erfolgen, wenn sich das mobile Gerät 400 über eine (oder mehrere) Primärspulen bewegt. Die Primärspulen können beispielsweise in Bodenplatten integriert sein, die auf einem bestehenden Boden ausgelegt werden, oder direkt in den Boden eingebaut oder aufgebracht sein.

Das mobile Gerät 400 kann grundsätzlich jede Art von Gerät sein, das elektrische Energie für einen beliebigen Zweck benötigt. Beispielhafte Anwendungen finden sich bevorzugt bei Fahrzeugen jeglicher Art, insbesondere fahrerlose Transportfahrzeuge (auch als FTS oder AGV bezeichnet), Gabelstapler, Autos, Busse, LKWs, aber auch bei anderen Systemen, wie etwa Fördersystemen, Robotern, etc.

Fig. 11 zeigt einen schematischen Aufbau einer PCB-Induktivität (hier einer Drossel). Dabei ist ein Ferritkern 500 in eine oder mehrere PCB-Leiterplatten 501, die die elektrischen Windungen der Drossel enthalten, mithilfe von Durchsteckmontage eingebracht worden. Der Ferritkern 500 kann alternativ auch durch einzelne Platten oder anderen Kernformen aufgebaut sein. Die PCB-Leiterplatten bilden die beschriebene elektrische Leitung, wobei bei dieser Ausgestaltung des Ferritkerns 500 ein Lagenwechsel (also ein Wechsel einer Leiterbahn von einer Trägerfläche in eine andere Trägerfläche) bevorzugt außerhalb des Ferritkerns erfolgt. Es können mehrere Leiterplatten 501 übereinandergestapelt werden, wobei jede Leiterplatte 501 wie vorliegend beschrieben durch elektrische Leitungen gebildet ist. In einer weiteren Anwendung können Spulen der vorliegenden Erfindung auch bei Transformatoren eingesetzt werden, in dem die Primär- und Sekundärspulen mittels der erfindungsgemäßen Leitung aufgebaut sind. Die Transformatorkerne (in E-Form) können, wie in Fig. 11 gezeigt, durch die jeweilige Spule gesteckt sein, d.h. die beiden E-förmigen Kerne tragen jeweils eine Spule des Transformators, der somit ähnlich wie die in Fig. 11 gezeigte PCB-Induktivität aussieht.

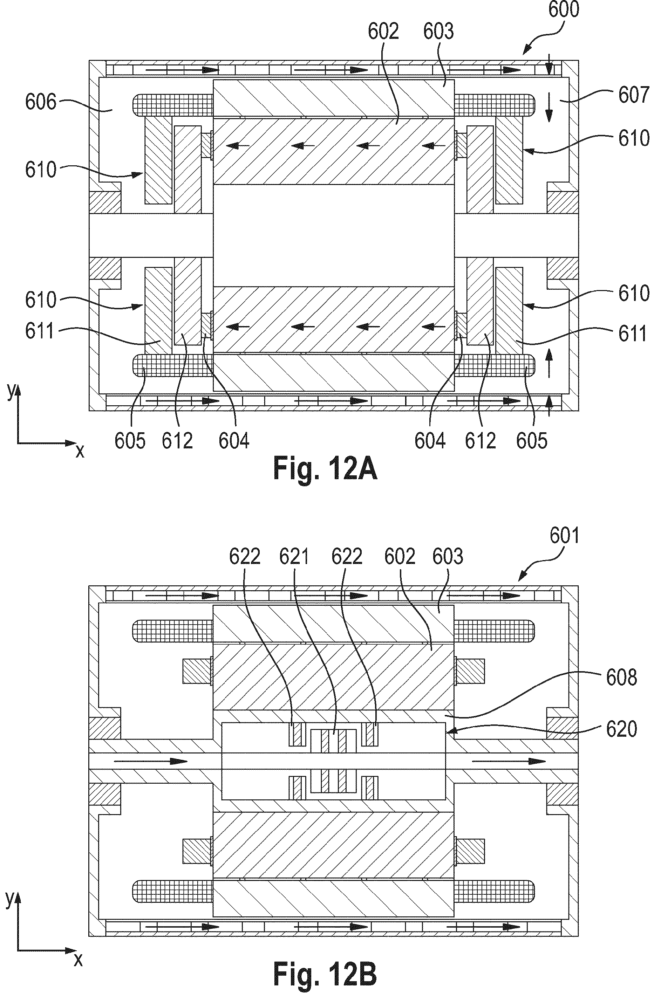

Fig. 12 zeigt im Querschnitt zwei Ausführungsformen 600, 601 einer elektrischen Maschine, insbesondere einer induktiv elektrisch erregten Synchronmaschine (iEESM), bei der die erfindungsgemäße elektrische Leitung eingesetzt werden kann. Die gezeigten elektrischen Maschinen 600, 601 weisen jeweils einen Maschinen-Rotor 602 und einen Maschinen-Stator 603 auf, die jeweils beispielsweise aus Blechpakten aufgebaut sind. Zur Erzeugung eines magnetischen Feldes auf dem Maschinen-Rotor 602 ist die Übertragung von elektrischer Energie auf den Maschinen-Rotor 602 bzw. auf eine Erregerwicklung des Maschinen-Rotors 602 der elektrisch erregten Synchronmaschine 600, 601 notwendig. Dazu kann sind vorliegend induktive Energieübertragungsvorrichtungen 610, 620 vorgesehen. Solche induktiv elektrisch erregten Synchronmaschinen sind beispielsweise in der DE102020207000 B4 und DE102020206998 B4 beschrieben, auf die hinsichtlich des grundsätzlichen Aufbaus und der Funktionsweise einer solchen Maschine verwiesen wird.

Fig. 12A zeigt eine elektrische Maschine 600 mit einer (oder mehreren, vorliegend zwei) induktiven Energieübertragungsvorrichtung(en) 610 mit jeweils einer Primärspule 611 und einer Sekundärspule 612. Die Primärspulen 611 sind an dem Maschinen-Stator 603 angebracht, beispielsweise im Bereich des Wickelkopfes 605 des Maschinen-Stators 603. Die Sekundärspulen 612 sind an dem Maschinen-Rotor 602 angebracht, beispielsweise im Bereich des Wickelkopfes 604 des Maschinen-Rotors 602. Im gezeigten Ausführungsbeispiel sind die Energieübertragungsvorrichtungen 610 axial an den beiden Enden 606, 607 des wirksamen Teils der elektrischen Maschine 600 angeordnet.

Fig. 12B zeigt eine elektrische Maschine 601 mit einer induktiven Energieübertragungsvorrichtung 620 in einer Hohlwelle 608 der elektrischen Maschine 601. Die Primärspule 621 ist an einer zentralen Welle 609 innerhalb der Hohlwelle 608 angebracht, durch die beispielsweise ein Kühlmittel geführt werden kann. Die Sekundärspulen 622 (vorliegend zwei, es kann aber auch nur eine sein) sind an dem Maschinen-Rotor 602 angebracht.

Die Energieübertragungsvorrichtungsvorrichtungen 610, 620 dienen jeweils zur induktiven Energieübertragung auf den Maschinen-Rotor 602 der elektrischen Maschine und können grundsätzlich wie oben beschrieben, beispielsweise im Zusammenhang mit Fig. 9, aufgebaut sein. Insbesondere sind die Primärspulen und/oder die Sekundärspulen (bevorzugt beide) unter Verwendung der erfindungsgemäßen elektrischen Leitung aufgebaut.

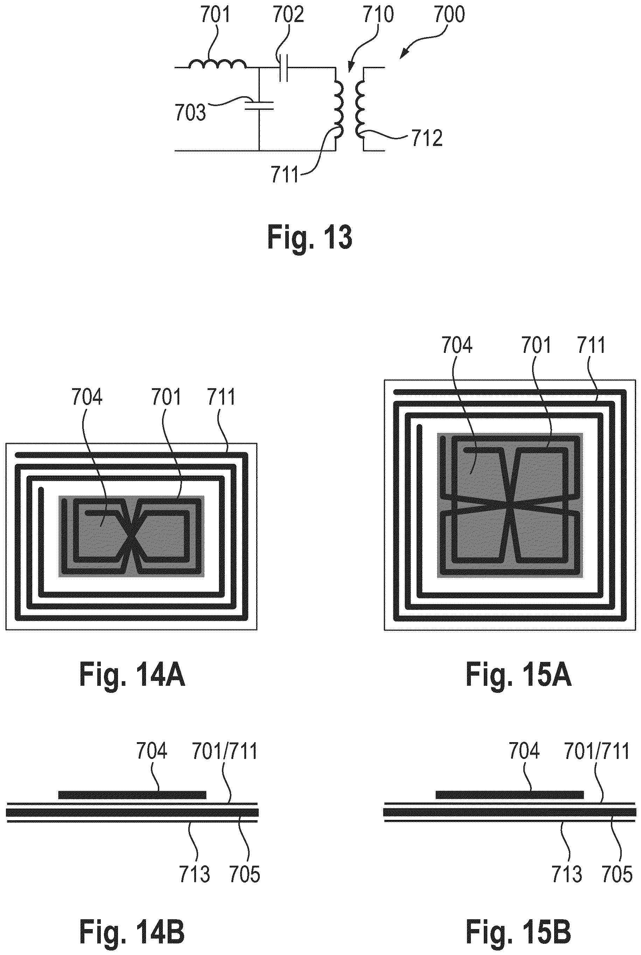

Fig. 13 zeigt eine Ausführungsform einer Kompensationsschaltung 700, wie sie beispielsweise in den in Fig. 9 gezeigten Elektronikeinrichtungen 312, 322 eingesetzt werden kann zur Blindleistungskompensation bei einem magnetisch gekoppelten Spulenpaar 710 aus einer Primärspule 711 und einer Sekundärspule 712. Bevorzugt wird eine solche Kompensationsschaltung 700 auf der stationären Seite einer induktiven Energieübertragungsvorrichtung eingesetzt. Sie kann aber auch auf beiden Seiten oder nur auf der beweglichen Seite eingesetzt werden. Die gezeigte Kompensationsschaltung 700 zur Blindleistungskompensation weist eine Drosselspule 701 und zwei Kapazitäten 702, 703 auf, wobei die Kapazität 702 in Reihe zu der Drosselspule 701 und der Primärspule 711 geschaltet ist und die Kapazität 703 parallel zu der Reihenschaltung aus Kapazität 702 und Primärspule 711 geschaltet ist. Die Drosselspule 701 und die Primärspule 711 zur Energieübertragung können auf einer gemeinsamen Leiterplatte untergebracht sein. Ferner ist die Drosselspule 701 bevorzugt ebenfalls unter Verwendung der erfindungsgemäßen Leitung aufgebaut.

Die Figuren 14 und 15 zeigen zwei Ausführungsformen der Anordnung der Drosselspule 701 und der Primärspule 711, jeweils als Draufsicht (Fig. 14A und Fig. 15A) und als Querschnitt (Fig. 14B und Fig. 15B). Die gleiche Anordnung kann auch gewählt werden, wenn die Kompensationsschaltung auf der Sekundärseite angeordnet ist, wobei dann die Sekundärspule 712 dort angeordnet wäre, wo in den Figuren 14 und 15 die Primärspule 711 angeordnet ist. Wie in den Figuren 14A und 15A erkennbar ist, ist die Drosselspule 701 innerhalb der Primärspule 711 angeordnet. Bevorzugt liegen beide in einer Ebene und sind deshalb in der Ansicht der Figuren 14B und 15B nicht separat erkennbar. Die Drosselspule 701 ist bevorzugt magnetisch entkoppelt von der Primärspule 711. Zur Verbesserung der Spuleneigenschaften kann die innere Drosselspule 701 mit zusätzlichem magnetisch leitfähigem Material 704 versehen sein, beispielsweise mit Ferrit oder nanokristallinem Material. Beispielsweise kann eine Schicht aus magnetisch leitfähigem Material (z.B. Ferritplättchen) unterhalb der Drosselspule 701 (also zwischen der Drosselspule 701 und der Primärspule 711) angeordnet sein. Der sonstige Lagenaufbau kann dem einer üblichen Energieübertragungsspule, beispielsweise der Primärspule 711, entsprechen. Ferner können weiteres magnetisch leitfähiges Material 705 (z.B. eine weitere Ferritschicht) und eine elektrisch leitende Schicht 713 zur Abschirmung unterhalb der Primärspule 711 angeordnet sein.

Die vorliegende Erfindung stellt somit eine elektrische Leitung bereit, mit der eine herkömmliche Litze mittels Leiterbahnen auf einer Leiterplatte realisiert werden kann. Mithilfe der erfindungsgemäßen elektrischen Leitung können diverse Anwendungen im kHz-Bereich und bei höheren Frequenzen verlustarm arbeiten, preiswert hergestellt werden und mit geringem Platzbedarf auskommen, insbesondere verglichen mit der Verwendung herkömmlicher elektrischer Leitungen wie beispielsweise herkömmlichen Litzen. Solche Anwendungen betreffen insbesondere Spulen, eine induktive Energieübertragungsvorrichtung und ein elektrisches Gerät, wie beispielsweise ein mobiles elektrisches Gerät einer Spule oder einer Energieübertragungsvorrichtung, eine Bodenplatte mit einer Spule oder eine elektrische Maschine mit einer Energieübertragungsvorrichtung.

Grundsätzlich kann die vorliegende Erfindung überall eingesetzt werden, wo kontaktlos elektrische Energie übertragen werden soll und wo bislang Schleifringe oder andere Mittel zur Energieübertragung verwendet werden. Dies betrifft u.a. Fahrzeuge aller Art, insbesondere elektrische Fahrzeuge wie etwa Elektroautos, Elektrobusse, Elektro-LKWs, Flurförderfahrzeuge, mobile Fahrzeugroboter, Gabelhubwagen. Weitere Anwendungen finden sich bei Küchengeräten, Kochplatten, Zahnbürsten, Robotern, Mobilfunkgeräte, Computer, Tablets, Elektrowerkzeuge, usw.

## Patentansprüche

1. Elektrische Leitung mit:
einem Leitungsträger mit mindestens zwei im Wesentlichen parallel angeordneten Trägerschichten; und
einer Vielzahl von Leiterbahnen, die auf mindestens drei unterschiedlichen, im Wesentlichen parallel angeordneten Trägerflächen der Trägerschichten angeordnet sind, wobei:
- eine einzelne Leiterbahn der Vielzahl von Leiterbahnen mindestens drei Leiterbahnabschnitte aufweist, die auf mindestens drei unterschiedlichen Trägerflächen angeordnet sind;
- jeweils zwei Leiterbahnabschnitte einer Leiterbahn durch eine quer zu den Trägerflächen und durch mindestens eine Trägerschicht verlaufende Vertikalverbindung miteinander verbunden sind;
- auf einer Trägerfläche mehrere Leiterbahnabschnitte verschiedener Leiterbahnen angeordnet sind, die zumindest bereichsweise parallel zueinander und die zumindest bereichsweise entlang einer Längserstreckungsrichtung verlaufen; und
- ein auf einer Trägerfläche angeordneter Leiterbahnabschnitt mehrere Abschnittselemente aufweist, wobei jeweils zwei in Längserstreckungsrichtung aufeinander folgende Abschnittselemente sowohl in Längserstreckungsrichtung als auch in senkrecht dazu verlaufender Querrichtung versetzt zueinander angeordnet sind und durch ein Querverbindungselement miteinander verbunden sind.

2. Elektrische Leitung gemäß Anspruch 1,
wobei ein Abschnittselement eines Leiterbahnabschnitts durch ein Endverbindungselement mit einer Vertikalverbindung verbunden ist, wobei die Vertikalverbindung in Querrichtung versetzt zu dem Abschnittselement angeordnet ist.

3. Elektrische Leitung gemäß Anspruch 2,
wobei die Querverbindungselemente und die Endverbindungselemente in einer Trägerfläche gruppenweise parallel zueinander angeordnet sind.

4. Elektrische Leitung gemäß einem der vorstehenden Ansprüche,
wobei die Vertikalverbindungen in mindestens einem Vertikalverbindungsbereich angeordnet sind, der in Längserstreckungsrichtung und/oder im Wesentlichen parallel zu den Leiterbahnabschnitten verläuft.

5. Elektrische Leitung gemäß einem der vorstehenden Ansprüche,
wobei die Vertikalverbindungen in mindestens einem Vertikalverbindungsbereich angeordnet sind, der von den Leiterbahnabschnitten beabstandet ist und/oder in dem keine Abschnittselemente von Leiterbahnabschnitten angeordnet sind.

6. Elektrische Leitung gemäß Anspruch 5,
wobei in allen Vertikalverbindungsbereichen aller Trägerflächen keine Abschnittselemente von Leiterbahnabschnitten angeordnet sind und/oder wobei der Abstand zwischen einem Vertikalverbindungsbereich und unmittelbar benachbarten Abschnittselementen mindestens dem Abstand zwischen zwei benachbarten Abschnittselementen entspricht.

7. Elektrische Leitung gemäß einem der Ansprüche 5 bis 6,
wobei auf mindestens einer Trägerfläche der Abstand zwischen dem Vertikalverbindungsbereich und unmittelbar benachbarten Abschnittselementen gleich oder größer ist als der Abstand zwischen zwei benachbarten Abschnittselementen.

8. Elektrische Leitung gemäß einem der Ansprüche 4 bis 7,
wobei der Vertikalverbindungsbereich zwei Vertikalverbindungsteilbereiche aufweist, die in Querrichtung gesehen in gegenüberliegenden Endbereichen außerhalb des zentralen Bereichs, in dem die Leiterbahnabschnitte verlaufen, angeordnet sind.

9. Elektrische Leitung gemäß einem der vorstehenden Ansprüche,
wobei die Vertikalverbindungen durch mehrere Trägerschichten, insbesondere durch alle Trägerschichten, hindurch reichen.

10. Elektrische Leitung gemäß einem der vorstehenden Ansprüche,
wobei die Vertikalverbindungen jeweils mehrere Verbindungselemente, insbesondere mehrere parallel verlaufende Verbindungselemente, aufweisen und/oder als ein oder mehrere Vias oder Durchkontaktierungen ausgestaltet sind.

11. Elektrische Leitung gemäß einem der vorstehenden Ansprüche,
wobei auf einer ersten Trägerfläche die Abschnittselemente eines Leiterbahnabschnitts in Längserstreckungsrichtung gesehen in einer ersten Richtung in Querrichtung zueinander versetzt sind und in einer zweiten Trägerfläche die Abschnittselemente eines Leiterbahnabschnitts in Längserstreckungsrichtung gesehen in einer zweiten Richtung in Querrichtung zueinander versetzt sind, die entgegensetzt zu der ersten Richtung verläuft.

12. Elektrische Leitung gemäß einem der vorstehenden Ansprüche,
mit zwei oder mehr Leitungsträgern, die übereinander angeordnet sind und deren Vertikalverbindungen an gegenüber liegenden Trägerflächen zweier Leitungsträger elektrisch miteinander verbunden sind.

13. Spule mit mindestens einer spiralförmig angeordneten Windung einer elektrischen Leitung gemäß einem der vorstehenden Ansprüche.

14. Induktive Energieübertragungsvorrichtung mit einer Primärspuleneinheit und einer Sekundärspuleneinheit, wobei die Primärspuleneinheit und/oder die Sekundärspuleneinheit eine Spule gemäß Anspruch 13 aufweist.

15. Elektrisches Gerät mit einer Spule gemäß Anspruch 13 und/oder einer induktiven Energieübertragungsvorrichtung gemäß Anspruch 14, insbesondere mobiles Gerät oder Bodenplatte mit einer Spule gemäß Anspruch 13 oder elektrische Maschine mit einer induktiven Energieübertragungsvorrichtung gemäß Anspruch 14.
